# EUROPEAN PATENT SPECIFICATION

(11) **EP 3 185 046 B1**
(45) Date of publication and mention of the grant of the patent: **02.12.2020**
(21) Application number: 16192332.1
(22) Date of filing: 05.10.2016
(51) Int. Cl.: G01T 7/00, G01V 5/00

(54) **PORTABLE BACKSCATTER IMAGING INSPECTION APPARATUS AND IMAGING METHOD**
TRAGBARE VORRICHTUNG ZUR RÜCKSTREUUNGSBILDGEBUNGSINSPEKTION UND BILDGEBUNGSVERFAHREN
APPAREIL D'INSPECTION D'IMAGERIE DE RÉTRODIFFUSION PORTABLE ET PROCÉDÉ D'IMAGERIE

(30) Priority: 25.12.2015 CN 201510996664
(43) Date of publication of application: 28.06.2017
(73) Proprietor: Nuctech Company Limited, TongFang Building, Shuangqinglu, Haidian District Beijing 100084 (CN)
(72) Inventor: CHEN, Zhiqiang, Beijing, 100084 (CN); LI, Yuanjing, Beijing, 100084 (CN); ZHAO, Ziran, Beijing, 100084 (CN); WU, Wanlong, Beijing, 100084 (CN); JIN, Yingkang, Beijing, 100084 (CN); TANG, Le, Beijing, 100084 (CN); TANG, Xiao, Beijing, 100084 (CN); DING, Guangwei, Beijing, 100084 (CN)
(74) Representative: Held, Stephan

(56) References cited:
- WO-A1-2016/154044
- WO-A2-2009/035890
- US-A- 5 763 886
- US-A1- 2013 195 248

## Description

### TECHNICAL FIELD

This invention relates to the field of X-ray imaging applications, particularly to a portable backscatter imaging inspection apparatus and an imaging method.

### BACKGROUND

X-ray backscatter imaging technology is an imaging technique capable of obtaining a substance image within a certain depth under an object's surface through detecting the strength of X-ray scattering from different substances. An imaging apparatus implementing X-ray backscatter imaging is generally provided with a radiation source and a detector system, wherein X-rays emitted from the radiation source pass through a rotating modulation mechanism and form a beam to carry out point-by-point scanning on a surface of an object under inspection; the detector system receives signals scattered back from the object and generates a depth image under the object's surface according to the signals.

Currently, systems adopting such imaging apparatuses are mostly applied to fixed security inspection apparatuses for containers, vehicles, persons and packages, i.e., the security inspection apparatus is fixed in a position and a target under inspection moves to complete passing-through inspection. This method requires that the target under inspection keeps a certain distance from the device, and imaging only can be performed at a constant angle, therefore, it has limitations on the range of applications of those security inspection apparatuses.

With the development of radiation source and detector techniques, miniaturized and portable backscatter devices have been emerged. Current portable backscatter imaging apparatuses may be put close to targets under inspection to realize multi-angle multi-azimuth imaging of the targets under inspection. Meanwhile, these backscatter imaging apparatuses are light and portable, and are beneficial to sufficiently expanding their application scenarios. However, in general, these backscatter imaging apparatuses are only suitable for scan imaging of objects having planar surfaces, for objects having curved surfaces or multiple irregular surfaces, their scan imaging effect is unsatisfied and it is difficult to clearly identify overall and practical interior situations of objects under inspection from the generated depth images, resulting in limitation on the range of applications of these backscatter imaging apparatuses.

US2013/195248 and US5763886 disclose a similar portable backscatter imaging inspection apparatus comprising an apparatus housing, an X-ray source, a rotating modulation mechanism, a radiation detector, motion sensor and a controller; the X-ray source, the rotating modulation mechanism, the radiation detector and the motion sensor are fixed disposed within the apparatus housing, wherein a receiving surface of the radiation detector is located at a front end of the apparatus housing, and is used to receive scatter signal data of a surface of an object under inspection to form a two dimensional (2D) image, the motion sensor is used to collect a three dimensional (3D) motion track and scanning angles of the portable backscatter imaging inspection apparatus during a scanning process, the controller is signaling connected to the radiation detector and the motion sensor, and is used to correct 2D images received by the radiation detector based on the 3D motion track and the scanning angles. Later said 2D images are stitched together to create a larger image.

### SUMMARY

The object of this invention is to provide a portable backscatter imaging inspection apparatus, as defined in independent claim 1, and imaging method, as defined in independent claim 6, capable of producing a better scan imaging effect on an object having a curved surface or multiple irregular surfaces.

In order to realize the above object, a portable backscatter imaging inspection apparatus is provided in this invention, comprising: an apparatus housing, an X-ray source, a rotating modulation mechanism, a radiation detector, a motion sensor and a controller. The rotating modulation mechanism, the X-ray source, the radiation detector and the motion sensor are fixed disposed within the apparatus housing, wherein a receiving surface of the radiation detector is located at a front end of the apparatus housing, and is used to receive scatter signal data of a surface of an object under inspection to form a two dimensional (2D) image, the motion sensor is used to collect a three dimensional (3D) motion track and scanning angle of the portable backscatter imaging inspection apparatus during a scanning process, the controller is signaling connected to the radiation detector and the motion sensor, and is used to splice and fuse a plurality of 2D images received by the radiation detector to obtain a stereo image of the surface of the object under inspection based on the 3D motion track and the scanning angles,
wherein, the motion sensor comprises an accelerometer and a gyroscope, wherein the accelerometer is used to measure the magnitude and direction of velocity and acceleration of the portable backscatter imaging inspection apparatus during the scanning process, the gyroscope is used to measure pitch, heading, and roll components of 3D rotation of the portable backscatter imaging inspection apparatus during the scanning process; 3D positions of the portable backscatter imaging inspection apparatus in various instants during the scanning process are obtained according to collaborated measurements of the accelerometer and the gyroscope to form the 3D motion track, and scanning angles of the receiving surface of the radiation detector faces toward the surface of the object under inspection in various instants are determined.

Further, the controller is further used to perform an image aspect ratio correction on a scanned 2D image according to the magnitude and direction of velocity and acceleration of the portable backscatter imaging inspection apparatus during the scanning process that are measured by the accelerometer.

Further, the controller is further used to perform a stretch or affine correction on the scanned 2D image according to the magnitude and direction of velocity and acceleration of the portable backscatter imaging inspection apparatus during the scanning process that are measured by the accelerometer, and the pitch, heading, and roll components of 3D rotation of the portable backscatter imaging inspection apparatus during the scanning process that are measured by the gyroscope.

Further, the controller is further used to splice and fuse a plurality of 2D images scanned by the radiation detector based on the 2D motion track of the portable backscatter imaging inspection apparatus to obtain a planar image of the surface of the object under inspection according to the magnitude and direction of velocity and acceleration of the portable backscatter imaging inspection apparatus during the scanning process that are measured by the accelerometer.

Further, the apparatus further comprises a monitor disposed on one side of the apparatus housing apart from the radiation detector, and the monitor is used to receive the stereo image of the surface of the object under inspection sent from the controller and display the stereo image.

In order to realize the above object, an imaging method based on the above portable backscatter imaging inspection apparatus is further provided in this invention, comprising:
emitting an X-ray beam from an X-ray source, scanning a surface of an object under inspection by means of a rotating modulation mechanism, and receiving scatter signal data of the surface of the object under inspection by a radiation detector to form a 2D image;
during a scanning process, collecting a 3D motion track and scanning angles of the portable backscatter imaging inspection apparatus by the motion sensor, comprising:
   splicing and fusing, by a controller, a plurality of 2D images received by the radiation detector to obtain a stereo image of the surface of the object under inspection based on the 3D motion track and scanning angles collected by the motion sensor,
   wherein the motion sensor comprises an accelerometer and a gyroscope, wherein collecting a 3D motion track and scanning angles of the portable backscatter imaging inspection apparatus by the motion sensor comprises:
      measuring the magnitude and direction of velocity and acceleration of the portable backscatter imaging inspection apparatus during the scanning process by the accelerometer, and measuring pitch, heading, and roll components of 3D rotation of the portable backscatter imaging inspection apparatus by the gyroscope;
      obtaining 3D positions of the portable backscatter imaging inspection apparatus in various instants during the scanning process according to collaborated measurements of the accelerometer and the gyroscope to form the 3D motion track, and determining scanning angles of a receiving surface of the radiation detector faces toward the surface of the object under inspection in various instants, and
      wherein, when a user carries out backscatter scanning on an object under inspection, the portable backscatter imaging apparatus is held by the user, and scans continuously along the surface of the object under inspection.

Further, the method further comprises:
according to the magnitude and direction of velocity and acceleration of the portable backscatter imaging inspection apparatus during the scanning process that are measured by the accelerometer, performing an image aspect ratio correction on a scanned 2D image by the controller.

Further, the method further comprises:
according to the magnitude and direction of velocity and acceleration of the portable backscatter imaging inspection apparatus during the scanning process that are measured by the accelerometer, and the pitch, heading, and roll components of 3D rotation of the portable backscatter imaging inspection apparatus measured by the gyroscope, performing a stretch or affine correction on the scanned 2D image by the controller.

Further, the method further comprises:
according to the magnitude and direction of velocity and acceleration of the portable backscatter imaging inspection apparatus during the scanning process that are determined by the accelerometer, splicing and fusing a plurality of 2D images scanned by the radiation detector to obtain a planar image of the surface of the object under inspection by the controller based on the 2D motion track of the portable backscatter imaging inspection apparatus.

Further, the portable backscatter imaging inspection apparatus further comprises a monitor disposed on one side of the apparatus housing apart from the radiation detector, the imaging method further comprises:
receiving, by the monitor, the stereo image of the surface of the object under inspection sent from the controller and displaying the stereo image.

With the above technical solution, the portable backscatter imaging inspection apparatus of this invention is provided with motion sensor capable of collecting its own 3D motion track and scanning angles during a scanning process, so that the controller may form a stereo backscatter image representing a surface of an object under inspection according to a plurality of 2D images received by the radiation detector , a 3D motion track and scanning angles, to solve the problem of scan-imaging an object under inspection having a curved surface or multiple irregular surfaces by the portable backscatter imaging apparatus, thereby a more comprehensive and intuitive representation of the inner structure and information of the object under inspection may be achieved.

### BRIEF DESCRIPTION OF THE DRAWINGS

Drawings illustrated herein, which are part of this application, are provided for a better understanding of the invention, in which:
Fig. 1 is an external structure diagram of the portable backscatter imaging inspection apparatus according to one embodiment of this invention.
Fig. 2 is an internal structure diagram of the embodiment of Fig. 1.
Fig. 3 is a flow chart of the imaging method of the portable backscatter imaging inspection apparatus according to one embodiment of this invention.
Fig. 4 is a flow chart of the imaging method of the portable backscatter imaging inspection apparatus according to another embodiment of this invention.

### DETAILED DESCRIPTION

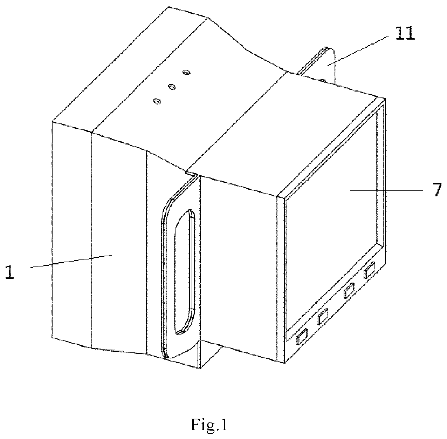

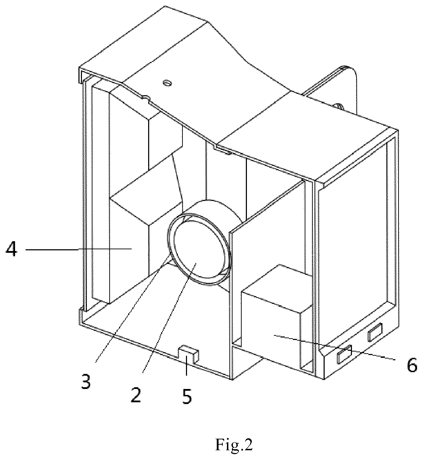

The present invention will be further illustrated below in details in conjunction with the accompanying drawings with exemplary embodiments. It is to be understood that the following Detailed Description is merely exemplary, rather than to limiting the present invention inappropriately. Fig. 1 is an external structure diagram of the portable backscatter imaging inspection apparatus according to one embodiment of this invention. In combination with the internal structure shown in Fig.2, the portable backscatter imaging inspection apparatus of this embodiment comprises: an apparatus housing 1, an X-ray source 2, a rotating modulation mechanism 3, a radiation detector 4, a motion sensor 5 and a controller 6. The X-ray source 2, the rotating modulation mechanism 3, the radiation detector 4 and the motion sensor 5 are fixed disposed within the apparatus housing 1. A receiving surface of the radiation detector 4 is located at a front end of the apparatus housing 1, and is used to receive scatter signal data of a surface of an object under inspection to form a 2D image.

The motion sensor 5 is used to collect a 3D motion track and scanning angles of the portable backscatter imaging inspection apparatus during a scanning process, the controller 6 is signaling connected to the radiation detector 4 and the motion sensor 5, and is used to splice and fuse a plurality of 2D images received by the radiation detector 4 based on the 3D motion track and the scanning angles to obtain a stereo image of the surface of the object under inspection.

In this embodiment, the X-ray source 2 emits X-rays at a large field angle, the X-rays are modulated to a high-speed rotating beam by the rotating modulation mechanism 3 and projected on a surface of an object under inspection and reciprocally move along a straight line to perform one-dimensional scanning. An operator holds a handheld apparatus and attaches the portable backscatter imaging inspection apparatus on the surface of the object under inspection, moves in a direction perpendicular to the projection movement direction, so that the projected beam scans an area having a width, and a 2D image having a depth is formed.

The X-ray source 2, the rotating modulation mechanism 3 and the radiation detector 4 are all conventional devices used for backscatter imaging. To enable the motion sensor 5 to accurately measure a 3D motion track and scanning angles of the portable backscatter imaging inspection apparatus, the motion sensor 5, the X-ray source 2, the rotating modulation mechanism 3 and the radiation detector 4 must be fixed within the apparatus housing 1 together while remaining relatively static with respect to each other.

The controller 6 may be disposed within the apparatus housing 1 as shown in Fig.2, for example, on one inner side of the apparatus housing 1 apart from the radiation detector, or may be disposed at any suitable locations within the apparatus housing 1. In another embodiment, the controller may be provided externally, or its functions may be realized using an external or remote control system.

For the convenience of holding the portable backscatter imaging apparatus, at least one handle may be provided on the outer side of the apparatus housing 1, for example, Fig.1 shows handle 11 for forward holding with left and right hands. The handle 11 may facilitate a continuous scanning action, and may enable to apply pressure on the surface of the object under inspection, to ensure that the receiving surface of the radiation detector 4 is tightly attached on the surface of the object under inspection.

When a user carries out backscatter scanning on an object under inspection, scanning is performed continuously along the surface of the object under inspection with the portable backscatter imaging apparatus (hereinafter, the apparatus) held by the user. This scanning may be continued no matter whether the object under inspection has a curved surface or multiple surfaces to be scanned. During the scanning process, in every instant (every point in time at which signal data corresponding to a scanned image is obtained), there is a 3D location point and a scanning angle value corresponding to the apparatus; this information is recorded by the motion sensor. A 3D motion track of the apparatus may be obtained according to these 3D location points. In the process of generating a surface image of the object under inspection, in association with scanning angles of the radiation detector when 2D images are received, image splicing and fusing may be performed according to this information to form a stereo image of the surface of the object under inspection. Thus, the problem of backscatter scanning and imaging of an object under inspection having a plurality of surfaces or a curved surface may be solved, a more comprehensive and intuitive representation of the inner structure and information of the object under inspection may be achieved. Consequently, the application range of the apparatus is expanded, the capability of representing the structure and information of an object under inspection of the apparatus may be improved, and the function of information integration of the apparatus is enhanced.

The motion sensor 5 comprises an accelerometer and a gyroscope. The accelerometer is used to measure the magnitude and direction of velocity and acceleration of the portable backscatter imaging inspection apparatus during the scanning process, and the gyroscope is used to measure pitch, heading, and roll components of 3D rotation of the portable backscatter imaging inspection apparatus. With collaborated measurements of the accelerometer and the gyroscope, 3D positions of the apparatus in various instants during the scanning process may be obtained to form the 3D motion track, and scanning angles in various instants at which the receiving surface of the radiation detector 4 faces toward the surface of the object under inspection are determined.

The user may scan in a linear reciprocating arc scan manner. Because it is difficult for the user to accurately keep the uniformity of velocity in different movement directions while scanning the object under inspection with the handheld apparatus, it is liable to scan sometimes too fast and sometimes too slow, so that images obtained in this manner always suffer from a stretched aspect ratio or other distortions. Thus, the accelerometer may be used to detect the placement state of the apparatus, and the controller 6 may correct the image aspect ratio of an obtained 2D image according to the magnitude and direction of velocity and acceleration of the apparatus that are measured by the accelerometer during the scanning process. Further, speed variation or rotation may occur during the movement of the handheld apparatus. In this case, the detection functions of the accelerometer and the gyroscope may be used, so that the controller 6 may perform a stretch or affine correction on an obtained 2D image according to the magnitude and direction of velocity and acceleration of the apparatus process that are measured by the accelerometer during the scanning, and pitch, heading, and roll components of 3D rotation of the apparatus measured by the gyroscope.

In addition to an object under inspection having a curved surface or a plurality of surfaces, the portable backscatter imaging inspection apparatus of this invention is also applicable to backscatter imaging inspection of an object having a larger surface to be scanned. In this process, the controller mainly depends on the magnitude and direction of velocity and acceleration of the apparatus that are measured by the accelerometer during a scanning process to splice and fuse a plurality of 2D images scanned by the radiation detector 4 based on the 2D motion track of the apparatus to obtain a planar image of the object under inspection.

A monitor 7 may be further provided on one side of the apparatus housing 1 apart from the radiation detector 4, which is used to receive a stereo image of the surface of the object under inspection sent from the controller 6 and display the stereo image. In another embodiment, the monitor 7 may be a device provided separately from the portable backscatter imaging inspection apparatus, or may be integrated in an external or remote control system. A scan image may be displayed on the monitor 7 as a strip representation.

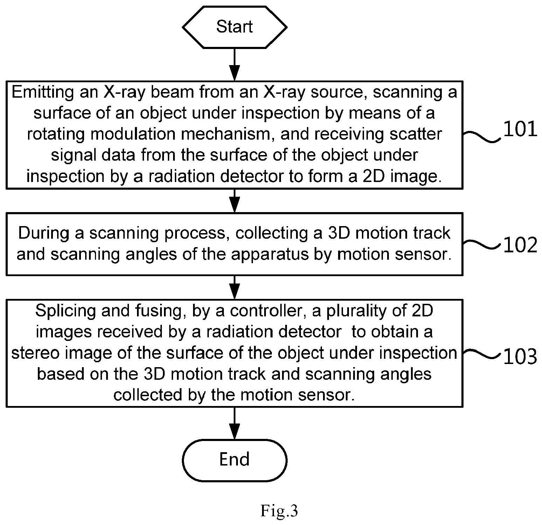

Based on the above embodiments of the portable backscatter imaging inspection apparatus, an imaging method is further provided in this invention. FIG. 3 is a flow chart of the imaging method based on the portable backscatter imaging inspection apparatus according to one embodiment of this invention. In this embodiment, the imaging method comprises:
at step 101, emitting an X-ray beam from an X-ray source 2, scanning a surface of an object under inspection by means of a rotating modulation mechanism 3, and receiving scatter signal data from the surface of the object under inspection by a radiation detector 4 to form a 2D image;
at step 102, during a scanning process, collecting a 3D motion track and scanning angles of a portable backscatter imaging inspection apparatus by the motion sensor 5;
at step 103 splicing and fusing, by a controller 6 , a plurality of 2D images received by a radiation detector 4 based on the 3D motion track and scanning angles collected by the motion sensor 5 to obtain a stereo image of the surface of the object under inspection.

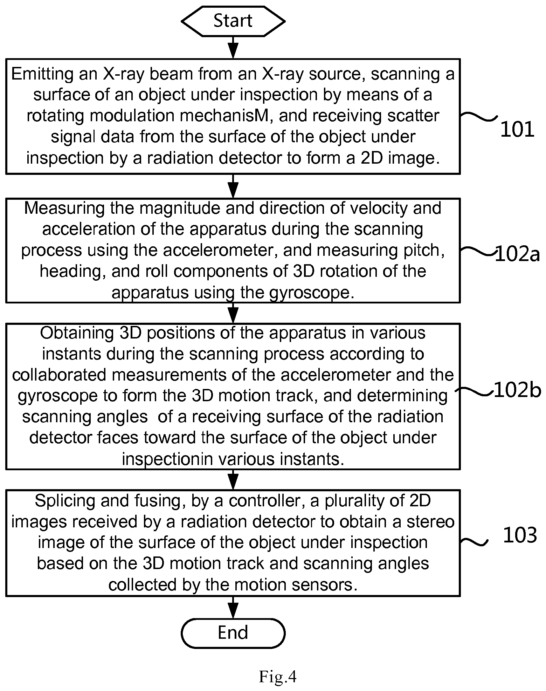

FIG. 4 is a flow chart of the imaging method based on the portable backscatter imaging inspection apparatus according to another embodiment of this invention. Compared with the above more general description of the process, the motion sensor 5 comprises an accelerometer and a gyroscope. Step 102 particularly comprises:
step 102a: measuring the magnitude and direction of velocity and acceleration of the portable backscatter imaging inspection apparatus during the scanning process using the accelerometer, and measuring pitch, heading, and roll components of 3D rotation of the portable backscatter imaging inspection apparatus using the gyroscope;
step 102b: obtaining 3D positions of the portable backscatter imaging inspection apparatus in various instants during the scanning process according to collaborated measurements of the accelerometer and the gyroscope to form the 3D motion track, and determining scanning angles in various instants, at which a receiving surface of the radiation detector 4 faces toward the surface of the object under inspection.

In another embodiment, the imaging method further comprises a step of performing an image aspect ratio correction on a scanned 2D image using a controller 6, according to the magnitude and direction of velocity and acceleration of the portable backscatter imaging inspection apparatus during the scanning process that are measured by the accelerometer.

In still another embodiment, the imaging method further comprises a step of performing a stretch or affine correction on the scanned 2D image using the controller 6, according to the magnitude and direction of velocity and acceleration of the portable backscatter imaging inspection apparatus during the scanning process that are measured by the accelerometer, and the pitch, heading, and roll components of 3D rotation of the portable backscatter imaging inspection apparatus measured by the gyroscope during the scanning process.

In still another embodiment, the imaging method may further comprises a step of splicing and fusing a plurality of 2D images scanned by the radiation detector 4 based on the 2D motion track of the portable backscatter imaging inspection apparatus to obtain a planar image of the surface of the object under inspection using the controller 6, according to the magnitude and direction of velocity and acceleration of the portable backscatter imaging inspection apparatus during the scanning process that are measured by the accelerometer.

With respect to the apparatus embodiment in which a monitor 7 is provided on one side of the apparatus housing 1 apart from the radiation detector 4, the imaging method further comprises a step of receiving a stereo image of the object under inspection sent from the controller 6 and displaying the stereo image on the monitor 7.

Those skilled in the art will appreciate that contents of the apparatus and method involved in the present invention are correlated with each other, especially the description of some functions and effects of the method is also applicable to the description of the apparatus, and thus will not be repeated in detail.

Furthermore, the method according to the invention may be also implemented as a computer program product comprising a computer readable medium on which a computer program for performing the functions defined in the method of the invention is stored. The skilled in the art would appreciate that, the various illustrative logical blocks, modules, circuits and algorithm steps could be implemented as an electronic hardware, computer software or a combination thereof.

Although some particular embodiments of this invention have been illustrated in detail, those skilled in the art may understand that the above exemplary embodiments are merely illustrative, rather than to being any limitation to the scope of this invention, and various changes or modifications may be effected to above embodiments by those skilled in the art without departing from the scope of this invention as defined in the appended claims.

## Claims

1. A portable backscatter imaging inspection apparatus comprising:
an apparatus housing (1), an X-ray source (2), a rotating modulation mechanism (3), a radiation detector (4), a motion sensor (5) and a controller (6); the X-ray source (2), the rotating modulation mechanism (3), the radiation detector (4) and the motion sensor (5) are fixed disposed within the apparatus housing (1), wherein a receiving surface of the radiation detector (4) is located at a front end of the apparatus housing (1), and is used to receive scatter signal data of a surface of an object under inspection to form a two dimensional (2D) image, the motion sensor (5) is used to collect a three dimensional (3D) motion track and scanning angles of the portable backscatter imaging inspection apparatus during a scanning process; said apparatus being **characterized in that** the motion sensor (5) comprises an accelerometer and a gyroscope, wherein the accelerometer is used to measure the magnitude and direction of velocity and acceleration of the portable backscatter imaging inspection apparatus during the scanning process, the gyroscope is used to measure pitch, heading, and roll components of 3D rotation of the portable backscatter imaging inspection apparatus during the scanning process; 3D positions of the portable backscatter imaging inspection apparatus in various instants during the scanning process are obtained according to collaborated measurements of the accelerometer and the gyroscope to form the 3D motion track, and scanning angles of the receiving surface of the radiation detector (4) facing toward the surface of the object under inspection in various instants are determined; and **in that** the controller (6) is signaling connected to the radiation detector (4) and the motion sensor (5), and is used to splice and fuse a plurality of 2D images received by the radiation detector (4) to obtain a stereo image of the surface of the object under inspection based on the 3D motion track and the scanning angles.

2. The portable backscatter imaging inspection apparatus according to claim 1, **characterized in that** the controller is further used to perform an image aspect ratio correction on a scanned 2D image, according to the magnitude and direction of velocity and acceleration of the portable backscatter imaging inspection apparatus during the scanning process that are measured by the accelerometer.

3. The portable backscatter imaging inspection apparatus according to claim 1, **characterized in that** the controller (6) is further used to perform a stretch or affine correction on the scanned 2D image, according to the magnitude and direction of velocity and acceleration of the portable backscatter imaging inspection apparatus during the scanning process that are measured by the accelerometer, and the pitch, heading, and roll components of 3D rotation of the portable backscatter imaging inspection apparatus that are measured by the gyroscope.

4. The portable backscatter imaging inspection apparatus according to claim 1, **characterized in that** the controller (6) is further used to splice and fuse a plurality of 2D images scanned by the radiation detector (4) based on the 2D motion track of the portable backscatter imaging inspection apparatus to obtain a planar image of the surface of the object under inspection, according to the magnitude and direction of velocity and acceleration of the portable backscatter imaging inspection apparatus during the scanning process that are measured by the accelerometer.

5. The portable backscatter imaging inspection apparatus according to claim 1, **characterized in** further comprising a monitor (7) disposed on one side of the apparatus housing (1) apart from the radiation detector (4), and the monitor (7) is used to receive the stereo image of the surface of the object under inspection sent from the controller (6) and display the stereo image.

6. An imaging method based on the portable backscatter imaging inspection apparatus according to any of claims 1-5, said method comprising:
emitting an X-ray beam from an X-ray source (2), scanning a surface of an object under inspection by means of a rotating modulation mechanism (3), and receiving scatter signal data of the surface of the object under inspection by a radiation detector (4) to form a 2D image;
during a scanning process, collecting a 3D motion track and scanning angles of the portable backscatter imaging inspection apparatus by motion sensor (5), said method being **characterized in** additionally comprising:
measuring the magnitude and direction of velocity and acceleration of the portable backscatter imaging inspection apparatus during the scanning process using the accelerometer, and measuring pitch, heading, and roll components of 3D rotation of the portable backscatter imaging inspection apparatus using a gyroscope;
obtaining 3D positions of the portable backscatter imaging inspection apparatus in various instants during the scanning process according to collaborated measurements of an accelerometer and the gyroscope to form the 3D motion track, and determining scanning angles in various instants, at which a receiving surface of the radiation detector (4) faces toward the surface of the object under inspection;
wherein the motion sensor (5) comprise the accelerometer and the gyroscope;
splicing and fusing, by a controller (6), a plurality of 2D images received by the radiation detector (4) to obtain a stereo image of the surface of the object under inspection based on the 3D motion track and scanning angles collected by the motion sensor (5);
wherein, when a user carries out backscatter scanning on an object under inspection, the portable backscatter imaging apparatus is held by the user, and scans continuously along the surface of the object under inspection.

7. The imaging method according to claim 6, **characterized in** further comprising:
according to the magnitude and direction of velocity and acceleration of the portable backscatter imaging inspection apparatus during the scanning process that are measured by the accelerometer, performing an image aspect ratio correction on a scanned 2D image by the controller (6).

8. The imaging method according to claim 6, **characterized in** further comprising:
according to the magnitude and direction of velocity and acceleration of the portable backscatter imaging inspection apparatus during the scanning process that are measured by the accelerometer, and the pitch, heading, and roll components of 3D rotation of the portable backscatter imaging inspection apparatus measured by the gyroscope, performing a stretch or affine correction on the scanned 2D image by the controller (6).

9. The imaging method according to claim 6, **characterized in** further comprising:
according to the magnitude and direction of velocity and acceleration of the portable backscatter imaging inspection apparatus during the scanning process that are determined by the accelerometer, splicing and fusing a plurality of 2D images scanned by the radiation detector (4) based on the 2D motion track of the portable backscatter imaging inspection apparatus to obtain a planar image of the surface of the object under inspection by the controller (6).

10. The imaging method according to claim 6, **characterized in that** the portable backscatter imaging inspection apparatus further comprises a monitor (7) disposed on one side of the apparatus housing (1) apart from the radiation detector, the imaging method further comprising:
receiving, by the monitor (7), the stereo image of the surface of the object under inspection sent from the controller (6) and displaying the stereo image.

## Patentansprüche

1. Tragbare Rückstreuungsbildgebungs-Prüfvorrichtung, die Folgendes umfasst:
ein Vorrichtungsgehäuse (1), eine Röntgenquelle (2), einen rotierenden Modulationsmechanismus (3), einen Strahlungsdetektor (4), einen Bewegungssensor (5) und eine Steuereinheit (6); wobei die Röntgenquelle (2), der rotierende Modulationsmechanismus (3), der Strahlungsdetektor (4) und der Bewegungssensor (5) im Vorrichtungsgehäuse (1) befestigt angeordnet sind, wobei eine Empfangsfläche des Strahlungsdetektors (4) an einem Stirnende des Vorrichtungsgehäuses (1) angeordnet ist und verwendet wird, um Streusignaldaten von einer Oberfläche eines in Prüfung befindlichen Gegenstands zu empfangen, um ein zweidimensionales Bild (2D-Bild) zu erzeugen, wobei der Bewegungssensor (5) verwendet wird, um während eines Abtastvorgangs eine dreidimensionale Bewegungsbahn (3D-Bewegungsbahn) und Abtastwinkel der tragbaren Rückstreuungsbildgebungs-Prüfvorrichtung zu erfassen,
wobei die Vorrichtung **dadurch gekennzeichnet ist, dass**
der Bewegungssensor (5) eine Beschleunigungsmesseinrichtung und ein Gyroskop umfasst, wobei die Beschleunigungsmesseinrichtung verwendet wird, um die Größe und die Richtung von Geschwindigkeit und Beschleunigung der tragbaren Rückstreuungsbildgebungs-Prüfvorrichtung während des Abtastvorgangs zu messen, das Gyroskop verwendet wird, um Nick-, Gier- und Rollkomponenten einer 3D-Drehung der tragbaren Rückstreuungsbildgebungs-Prüfvorrichtung während des Abtastvorgangs zu messen; wobei gemäß den zusammen verarbeiteten Messungen der Beschleunigungsmesseinrichtung und des Gyroskops 3D-Positionen der tragbaren Rückstreuungsbildgebungs-Prüfvorrichtung zu diversen Zeitpunkten während des Abtastvorgangs erhalten werden, um die 3D-Bewegungsbahn zu bilden, und Abtastwinkel der Empfangsfläche des Strahlungsdetektors (4), die in Richtung der Oberfläche des in Prüfung befindlichen Gegenstands orientiert ist, zu diversen Zeitpunkten bestimmt werden; und dass
die Steuereinheit (6) mit dem Strahlungsdetektor (4) und dem Bewegungssensor (5) signaltechnisch verbunden ist und verwendet wird, um auf der Grundlage der 3D-Bewegungsbahn und der Abtastwinkel mehrere 2D-Bilder, die durch den Strahlungsdetektor (4) empfangen werden, zu verbinden und zu verschmelzen, um ein Stereobild der Oberfläche des in Prüfung befindlichen Gegenstands zu erhalten.

2. Tragbare Rückstreuungsbildgebungs-Prüfvorrichtung nach Anspruch 1, **dadurch gekennzeichnet, dass** die Steuereinheit ferner verwendet wird, um auf einem abgetasteten 2D-Bild gemäß der Größe und der Richtung von Geschwindigkeit und Beschleunigung der tragbaren Rückstreuungsbildgebungs-Prüfvorrichtung während des Abtastvorgangs, die durch die Beschleunigungsmesseinrichtung gemessen werden, eine Korrektur des Bildseitenverhältnisses durchzuführen.

3. Tragbare Rückstreuungsbildgebungs-Prüfvorrichtung nach Anspruch 1, **dadurch gekennzeichnet, dass** die Steuereinheit (6) ferner verwendet wird, um auf dem abgetasteten 2D-Bild gemäß der Größe und der Richtung von Geschwindigkeit und Beschleunigung der tragbaren Rückstreuungsbildgebungs-Prüfvorrichtung während des Abtastvorgangs, die durch die Beschleunigungsmesseinrichtung gemessen werden, und den Nick-, Gier- und Rollkomponenten einer 3D-Drehung der tragbaren Rückstreuungsbildgebungs-Prüfvorrichtung, die durch das Gyroskop gemessen werden, eine streckende oder affine Korrektur durchzuführen.

4. Tragbare Rückstreuungsbildgebungs-Prüfvorrichtung nach Anspruch 1, **dadurch gekennzeichnet, dass** die Steuereinheit (6) ferner verwendet wird, um auf der Grundlage der 2D-Bewegungsspur der tragbaren Rückstreuungsbildgebungs-Prüfvorrichtung mehrere 2D-Bilder, die durch den Strahlungsdetektor (4) abgetastet werden, zu verbinden und zu verschmelzen, um ein ebenes Bild der Oberfläche des in Prüfung befindlichen Gegenstands gemäß der Größe und der Richtung von Geschwindigkeit und Beschleunigung der tragbaren Rückstreuungsbildgebungs-Prüfvorrichtung während des Abtastvorgangs, die durch die Beschleunigungsmesseinrichtung gemessen werden, zu erhalten.

5. Tragbare Rückstreuungsbildgebungs-Prüfvorrichtung nach Anspruch 1, **dadurch gekennzeichnet, dass** sie ferner einen Bildschirm (7) umfasst, der auf einer Seite des Vorrichtungsgehäuses (1) vom Strahlungsdetektor (4) getrennt angeordnet ist, und der Bildschirm (7) verwendet wird, um das Stereobild der Oberfläche des in Prüfung befindlichen Gegenstands, das von der Steuereinheit (6) gesendet wird, zu empfangen und das Stereobild anzuzeigen.

6. Bildgebungsverfahren auf der Grundlage einer tragbaren Rückstreuungsbildgebungs-Prüfvorrichtung nach einem der Ansprüche 1-5, wobei das Verfahren Folgendes umfasst:
Emittieren eines Röntgenstrahls von einer Röntgenquelle (2), Abtasten einer Oberfläche eines in Prüfung befindlichen Gegenstands mittels eines rotierenden Modulationsmechanismus (3) und Empfangen von Streusignaldaten der Oberfläche des in Prüfung befindlichen Gegenstands durch einen Strahlungsdetektor (4), um ein 2D-Bild zu erzeugen;
während eines Abtastvorgangs, Erfassen einer 3D-Bewegungsspur und von Abtastwinkeln der tragbaren Rückstreuungsbildgebungs-Prüfvorrichtung durch einen Bewegungssensor (5),
wobei das Verfahren **dadurch gekennzeichnet ist, dass** es zusätzlich Folgendes umfasst:
Messen der Größe und der Richtung von Geschwindigkeit und Beschleunigung der tragbaren Rückstreuungsbildgebungs-Prüfvorrichtung während des Abtastvorgangs unter Verwendung der Beschleunigungsmesseinrichtung und Messen von Nick-, Gier- und Rollkomponenten einer 3D-Drehung der tragbaren Rückstreuungsbildgebungs-Prüfvorrichtung unter Verwendung eines Gyroskops;
Erhalten von 3D-Positionen der tragbaren Rückstreuungsbildgebungs-Prüfvorrichtung zu diversen Zeitpunkten während des Abtastvorgangs gemäß den zusammen verarbeiteten Messungen einer Beschleunigungsmesseinrichtung und des Gyroskops, um die 3D-Bewegungsspur zu bilden, und Bestimmen on Abtastwinkeln zu diversen Zeitpunkten, zu denen eine Empfangsfläche des Strahlungsdetektors (4) in Richtung der Oberfläche des in Prüfung befindlichen Gegenstands orientiert ist;
wobei der Bewegungssensor (5) die Beschleunigungsmesseinrichtung und das Gyroskop umfasst;
Verbinden und Verschmelzen mehrerer 2D-Bilder, die durch den Strahlungsdetektor (4) empfangen werden, durch eine Steuereinheit (6), um auf der Grundlage der 3D-Bewegungsbahn und der Abtastwinkel, die durch den Bewegungssensor (5) erfasst werden, ein Stereobild der Oberfläche des in Prüfung befindlichen Gegenstands zu erhalten;
wobei dann, wenn ein Anwender eine Rückstrahlungsabtastung auf einem in Prüfung befindlichen Gegenstand ausführt, die tragbare Rückstreuungsbildgebungs-Prüfvorrichtung durch den Anwender gehalten wird und auf ununterbrochene Weise entlang der Oberfläche des in Prüfung befindlichen Gegenstands abtastet.

7. Bildgebungsverfahren nach Anspruch 6, **dadurch gekennzeichnet, dass** es ferner Folgendes umfasst:
gemäß der Größe und der Richtung von Geschwindigkeit und Beschleunigung der tragbaren Rückstreuungsbildgebungs-Prüfvorrichtung während des Abtastvorgangs, die durch die Beschleunigungsmesseinrichtung gemessen werden, Durchführen einer Korrektur des Bildseitenverhältnisses auf einem abgetasteten 2D-Bild durch die Steuereinheit (6).

8. Bildgebungsverfahren nach Anspruch 6, **dadurch gekennzeichnet, dass** es ferner Folgendes umfasst:
gemäß der Größe und der Richtung von Geschwindigkeit und Beschleunigung der tragbaren Rückstreuungsbildgebungs-Prüfvorrichtung während des Abtastvorgangs, die durch die Beschleunigungsmesseinrichtung gemessen werden, und den Nick-, Gier- und Rollkomponenten einer 3D-Drehung der tragbaren Rückstreuungsbildgebungs-Prüfvorrichtung, die durch das Gyroskop gemessen werden, Durchführen einer streckenden oder affinen Korrektur auf dem abgetasteten 2D-Bild durch die Steuereinheit (6).

9. Bildgebungsverfahren nach Anspruch 6, **dadurch gekennzeichnet, dass** es ferner Folgendes umfasst:
gemäß der Größe und der Richtung von Geschwindigkeit und Beschleunigung der tragbaren Rückstreuungsbildgebungs-Prüfvorrichtung während des Abtastvorgangs, die durch die Beschleunigungsmesseinrichtung gemessen werden, Verbinden und Verschmelzen mehrerer 2D-Bilder, die durch den Strahlungsdetektor (4) abgetastet werden, auf der Grundlage der 2D-Bewegungsbahn der tragbaren Rückstreuungsbildgebungs-Prüfvorrichtung, um ein ebenes Bild der Oberfläche des in Prüfung befindlichen Gegenstands zu erhalten, durch die Steuereinheit (6).

10. Bildgebungsverfahren nach Anspruch 6, **dadurch gekennzeichnet, dass** die tragbare Rückstreuungsbildgebungs-Prüfvorrichtung ferner einen Bildschirm (7) umfasst, der auf einer Seite des Vorrichtungsgehäuses (1) vom Strahlungsdetektor getrennt angeordnet ist, wobei das Bildgebungsverfahren ferner Folgendes umfasst:
Empfangen des Stereobilds von der Oberfläche des in Prüfung befindlichen Gegenstands, das von der Steuereinheit (6) gesendet wird, und Anzeigen des Stereobilds durch den Bildschirm (7).

## Revendications

1. Appareil d'inspection portatif pour imagerie par rétrodiffusion, comprenant :
un boîtier d'appareil (1), une source de rayons X (2), un mécanisme de modulation rotatif (3), un détecteur de radiation (4), un capteur de mouvement (5) et un contrôleur (6), la source de rayons X (2), le mécanisme de modulation rotatif (3), le détecteur de radiation (4) et le capteur de mouvement (5) étant disposés de façon fixée à l'intérieur du boîtier d'appareil (1), dans lequel une surface de réception du détecteur de radiation (4) est située à une extrémité avant du boîtier d'appareil (1), et est utilisée pour recevoir des données de signaux diffusés provenant d'une surface d'un objet en cours d'inspection pour former une image bidimensionnelle (2D), le capteur de mouvement (5) étant utilisé pour collecter une piste de mouvement tridimensionnel (3D) et des angles de scannage de l'appareil d'inspection portatif pour imagerie par rétrodiffusion pendant un processus de scannage,
ledit appareil étant **caractérisé en ce que**
le capteur de mouvement (5) comprend un accéléromètre et un gyroscope, dans lequel l'accéléromètre est utilisé pour mesurer la valeur et la direction de vitesse et d'accélération de l'appareil d'inspection portatif pour imagerie par rétrodiffusion pendant le processus de scannage, le gyroscope est utilisé pour mesurer les composantes de tangage, de cap et de roulis d'une rotation 3D de l'appareil d'inspection portatif pour imagerie par rétrodiffusion pendant le processus de scannage, des positions en 3D de l'appareil d'inspection portatif pour imagerie par rétrodiffusion à divers instants pendant le processus de scannage sont obtenues en accord avec des mesures en collaboration de l'accéléromètre et du gyroscope pour former la piste de mouvement 3D, et les angles de scannage de la surface de réception du détecteur de radiation (4) face à la surface de l'objet en cours d'inspection à divers instants sont déterminés, et
**en ce que** le contrôleur (6) est connecté en termes de signalisation au détecteur de radiation (4) et au capteur de mouvement (5) et est utilisé pour accoler et pour fusionner une pluralité d'images 2D reçues par le détecteur de radiation (4) pour obtenir une image stéréoscopique de la surface de l'objet en cours d'inspection en se basant sur la piste de mouvement 3D et sur les angles de scannage.

2. Appareil d'inspection portatif pour imagerie par rétrodiffusion selon la revendication 1,
**caractérisé en ce que** le contrôleur est en outre utilisé pour effectuer une correction du rapport d'aspect d'image sur une image 2D scannée, en accord avec la valeur et la direction de la vitesse et de l'accélération de l'appareil d'inspection portatif pour imagerie par rétrodiffusion pendant le processus de scannage, qui sont mesurées par l'accéléromètre.

3. Appareil d'inspection portatif pour imagerie par rétrodiffusion selon la revendication 1,
**caractérisé en ce que** le contrôleur (6) est en outre utilisé pour effectuer une correction d'étirage ou une correction affine sur l'image 2D scannée, en accord avec la valeur et la direction de la vitesse et de l'accélération de l'appareil d'inspection portatif pour imagerie par rétrodiffusion pendant le processus de scannage qui sont mesurées par l'accéléromètre, et les composantes de tangage, de cap et de roulis de la rotation 3D de l'appareil d'inspection portatif pour imagerie par rétrodiffusion qui sont mesurées par le gyroscope.

4. Appareil d'inspection portatif pour imagerie par rétrodiffusion selon la revendication 1,
**caractérisé en ce que** le contrôleur (6) est en outre utilisé pour accoler et pour fusionner une pluralité d'images 2D scannées par le détecteur de radiation (4) sur la base de la piste de mouvement 2D de l'appareil d'inspection portatif pour imagerie par rétrodiffusion afin d'obtenir une image planaire de la surface de l'objet en cours d'inspection, en accord avec la valeur et la direction de la vitesse et de l'accélération de l'appareil d'inspection portatif pour imagerie par rétrodiffusion pendant le processus de scannage qui sont mesurées par l'accéléromètre.

5. Appareil d'inspection portatif pour imagerie par rétrodiffusion selon la revendication 1,
**caractérisé en ce qu'**il comprend en outre un moniteur (7) disposé sur un côté du boîtier d'appareil (1) séparément du détecteur de radiation (4), et le moniteur (7) est utilisé pour recevoir l'image stéréoscopique de la surface de l'objet en cours d'inspection envoyée depuis le contrôleur (6) et pour afficher l'image stéréoscopique.

6. Procédé d'imagerie basé sur l'appareil d'inspection portatif pour imagerie par rétrodiffusion selon l'une quelconque des revendications 1 à 5, ledit procédé comprenant les étapes consistant à :
émettre un faisceau de rayons X depuis une source de rayons X (2),
scanner une surface d'un objet en cours d'inspection au moyen d'un mécanisme de modulation rotatif (3), et
recevoir des données de signaux diffusés provenant de la surface de l'objet en cours d'inspection par un détecteur de radiation (4) pour former une image 2D ;
pendant un processus de scannage, collecter une piste de mouvement 3D et des angles de scannage de l'appareil d'inspection portatif pour imagerie par rétrodiffusion par un capteur de mouvement (5),
ledit procédé étant **caractérisé en ce qu'**il comprend additionnellement les étapes consistant à :
mesurer la valeur et la direction de la vitesse et de l'accélération de l'appareil d'inspection portatif pour imagerie par rétrodiffusion pendant le processus de scannage en utilisant l'accéléromètre, et mesurer les composantes de tangage, de cap, et de roulis de la rotation 3D de l'appareil d'inspection portatif pour imagerie par rétrodiffusion en utilisant un gyroscope ;
obtenir des positions 3D de l'appareil d'inspection portatif pour imagerie par rétrodiffusion à divers instants pendant le processus de scannage en accord avec les mesures en collaboration d'un accéléromètre et du gyroscope pour former la piste de mouvement 3D, et
déterminer les angles de scannage à divers instants auxquels une surface de réception du détecteur de radiation (4) fait face vers la surface de l'objet en cours d'inspection ;
dans lequel le capteur de mouvement (5) comprend l'accéléromètre et le gyroscope ;
accoler et fusionner, par un contrôleur (6), une pluralité d'images 2D reçues par le détecteur de radiation (4) pour obtenir une image stéréoscopique de la surface de l'objet en cours d'inspection sur la base de la piste de mouvement 3D et des angles de scannage collectés par le capteur de mouvement (5) ;
dans lequel, quand un utilisateur effectue un scannage par rétrodiffusion sur un objet en cours d'inspection, l'appareil portatif d'imagerie par rétrodiffusion est tenu par l'utilisateur, et celui-ci scanne en continu le long de la surface de l'objet en cours d'inspection.

7. Procédé d'imagerie selon la revendication 6, **caractérisé en ce qu'**il comprend en outre :
en accord avec la valeur et la direction de la vitesse et de l'accélération de l'appareil d'inspection portatif pour imagerie par rétrodiffusion pendant le processus de scannage, qui sont mesurées par l'accéléromètre, l'étape consistant à effectuer une correction du rapport d'aspect d'image sur une image scannée en 2D par le contrôleur (6).

8. Procédé d'imagerie selon la revendication 6, **caractérisé en ce qu'**il comprend en outre :
en accord avec la valeur et la direction de la vitesse et de l'accélération de l'appareil d'inspection portatif pour imagerie par rétrodiffusion pendant le processus de scannage, qui sont mesurées par l'accéléromètre, et en accord avec les composantes de tangage, de cap, et de roulis de la rotation 3D de l'appareil d'inspection portatif pour imagerie par rétrodiffusion, mesurées par le gyroscope, l'étape consistant à effectuer une correction d'étirage ou une correction affine sur l'image en 2D scannée par le contrôleur (6).

9. Procédé d'imagerie selon la revendication 6, **caractérisé en outre en ce qu'**il comprend :
en accord avec la valeur et la direction de la vitesse et de l'accélération de l'appareil d'inspection portatif pour imagerie par rétrodiffusion pendant le processus de scannage, qui sont déterminées par l'accéléromètre, les étapes consistant à coller et à fusionner une pluralité d'images en 2D scannées par le détecteur de radiation (4) sur la base de la piste de mouvement 2D de l'appareil d'inspection portatif pour imagerie par rétrodiffusion afin d'obtenir une image planaire de la surface de l'objet en cours d'inspection par le contrôleur (6).

10. Procédé d'imagerie selon la revendication 6, **caractérisé en ce que** l'appareil d'inspection portatif pour imagerie par rétrodiffusion comprend en outre un moniteur (7) disposé sur un côté du boîtier d'appareil (1) séparément du détecteur de radiation, le procédé d'imagerie comprenant en outre :
les étapes consistant à recevoir, par le moniteur (7), l'image stéréoscopique de la surface de l'objet en cours d'inspection envoyée depuis le contrôleur (6), et à afficher l'image stéréoscopique.
